# EUROPEAN PATENT APPLICATION

(11) **EP 4 675 456 A1**
(43) Date of publication of application: **07.01.2026**
(21) Application number: 24853348.1
(22) Date of filing: 12.06.2024
(51) Int. Cl.: G06F 16/2453

(54) **DATABASE INSTANCE PROCESSING METHOD AND APPARATUS, ELECTRONIC DEVICE, COMPUTER-READABLE STORAGE MEDIUM AND COMPUTER PROGRAM PRODUCT**

(30) Priority: 17.08.2023 CN 202311036046
(71) Applicant: Tencent Technology (Shenzhen) Company Limited, Shenzhen, Guangdong 518057 (CN)
(72) Inventor: LI, Shuo, Shenzhen, Guangdong 518057 (CN); LI, Jingang, Shenzhen, Guangdong 518057 (CN); WU, Xin, Shenzhen, Guangdong 518057 (CN); ZHENG, Lixiong, Shenzhen, Guangdong 518057 (CN); PAN, Anqun, Shenzhen, Guangdong 518057 (CN); LEI, Hailin, Shenzhen, Guangdong 518057 (CN)
(74) Representative: Eisenführ Speiser
(86) International application number: PCT/CN2024/098689
(87) International publication number: WO 2025/035933

(57) **Abstract**

This application provides a database instance processing method and apparatus, an electronic device, a computer-readable storage medium, and a computer program product. The method includes: obtaining a plurality of sample query statements for a database, and obtaining at least one computational element of the database corresponding to each sample query statement; forming, for each sample query statement, a database execution template of the sample query statement by using the at least one computational element of the database corresponding to the sample query statement; performing screening processing on a plurality of database execution templates corresponding to the plurality of sample query statements, to obtain a target database execution template; and generating a database instance corresponding to each target database execution template, any database instance being configured to respond, when being executed, to a target query statement corresponding to the any database instance.

## Description

### RELATED APPLICATION

This application claims priority to Chinese Patent Application No. 2023110360464 filed on August 17, 2023.

### FIELD OF THE TECHNOLOGY

This application relates to database technologies, and in particular, to a database instance processing method and apparatus, an electronic device, a computer-readable storage medium, and a computer program product.

### BACKGROUND OF THE DISCLOSURE

Database query refers to selecting, from a defined database, a data field needed by a user, and generally, directly performing a query operation on a database table in a data source. When query is performed by using a query statement, the query statement needs to be compiled. In the related art, a dynamic database compiling technology refers to performing determining and compiling in a process of executing a data set instance corresponding to the query statement. Consequently, query efficiency is very low. In addition, each time compiling is performed, a full quantity of standard database instances are executed. As a result, resource utilization of a database instance during query is low.

### SUMMARY

Embodiments of this application provide a database instance processing method and apparatus, an electronic device, a computer-readable storage medium, and a computer program product, to improve query efficiency of a query statement and resource utilization of a database.

Technical solutions in the embodiments of this application are implemented as follows:
An embodiment of this application provides a database instance processing method, the method being performed by an electronic device, and including:
obtaining a plurality of sample query statements for a database, and obtaining at least one computational element of the database corresponding to each sample query statement;
forming, for each sample query statement, a database execution template of the sample query statement by using at least one computational element of the database corresponding to the sample query statement;
screening out a target database execution template from a plurality of database execution templates corresponding to the plurality of sample query statements; and
generating a database instance corresponding to each target database execution template, any database instance being configured to respond, when being executed, to a target query statement corresponding to the any database instance.

An embodiment of this application provides a database instance processing apparatus, including:
an obtaining module, configured to obtain a plurality of sample query statements for a database, and obtain at least one computational element of the database corresponding to each sample query statement;
a template module, configured to form, for each sample query statement, a database execution template of the sample query statement by using at least one computational element of the database corresponding to the sample query statement;
a screening module, configured to screen out a target database execution template from a plurality of database execution templates corresponding to the plurality of sample query statements; and
a generation module, configured to generate a database instance corresponding to each target database execution template, any database instance being configured to respond, when being executed, to a target query statement corresponding to the any database instance.

An embodiment of this application provides an electronic device, including:
a memory, configured to store computer-executable instructions; and
a processor, configured to implement, when executing the computer-executable instructions stored in the memory, the database instance processing method provided in the embodiments of this application.

An embodiment of this application provides a computer-readable storage medium, having computer-executable instructions stored therein, to implement, when the computer-executable instructions are executed by a processor, the database instance processing method provided in the embodiments of this application.

An embodiment of this application provides a computer program product, including computer-executable instructions, to implement, when the computer-executable instructions are executed by a processor, the database instance processing method provided in the embodiments of this application.

The embodiments of this application have the following beneficial effects.

A database execution template corresponding to each sample query statement is formed based on at least one computational element of a database corresponding to each sample query statement. Screening processing is performed on a plurality of database execution templates corresponding to a plurality of sample query statements, to obtain a target database execution template. As a result, simplified processing on the plurality of database execution templates is implemented, resource occupation of the database by a redundant database execution template or a database execution template having low utilization is avoided, and resource utilization of the database is improved. A corresponding database instance is generated based on each target database execution template, to respond to a target query statement corresponding to the database instance. Therefore, in a manner of executing a customized database instance, only some database instances need to be executed to respond to the query statement. In comparison to a manner in which a full quantity of standard database instances need to be executed to respond to the query statement in the related art, a quantity of database instances that need to be executed to respond to the query statement can be reduced, and query efficiency of the query statement can be improved.

### BRIEF DESCRIPTION OF THE DRAWINGS

FIG. 1 is a schematic structural diagram of a database instance processing system according to an embodiment of this application.
FIG. 2 is a schematic structural diagram of an electronic device according to an embodiment of this application.
FIG. 3A is a first schematic flowchart of a database instance processing method according to an embodiment of this application.
FIG. 3B is a second schematic flowchart of a database instance processing method according to an embodiment of this application.
FIG. 3C is a third schematic flowchart of a database instance processing method according to an embodiment of this application.
FIG. 3D is a fourth schematic flowchart of a database instance processing method according to an embodiment of this application.
FIG. 4 is a schematic structural diagram of first information of a database instance processing method according to an embodiment of this application.
FIG. 5 is a schematic structural diagram of second information of a database instance processing method according to an embodiment of this application.
FIG. 6 is a schematic structural diagram of third information of a database instance processing method according to an embodiment of this application.
FIG. 7 is a schematic structural diagram of fourth information of a database instance processing method according to an embodiment of this application.
FIG. 8 is a schematic structural diagram of a database of a database instance processing method according to an embodiment of this application.
FIG. 9 is a schematic structural diagram of a database module of a database instance processing method according to an embodiment of this application.
FIG. 10 is a schematic structural diagram of a database module of a query statement of a database instance processing method according to an embodiment of this application.
FIG. 11 is a schematic structural diagram of a template of a database instance processing method according to an embodiment of this application.
FIG. 12 is a schematic diagram of template screening of a database instance processing method according to an embodiment of this application.
FIG. 13 is a schematic diagram of invocation of a database instance of a database instance processing method according to an embodiment of this application.

### DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following descriptions, the term "some embodiments" describes subsets of all possible embodiments, but "some embodiments" may be the same subset or different subsets of all the possible embodiments, and can be combined with each other without conflict.

In the following descriptions, the terms "first", "second", and "third" are merely intended to distinguish similar objects but do not indicate a specific order of objects. The specific order or sequence of "first", "second", and "third" may be interchangeable in proper circumstances to enable the embodiments of this application to be implemented in other orders than those illustrated or described herein.

In the embodiments of this application, the term "module" or "unit" refers to a computer program with a preset function or a part of the computer program and works, together with other related parts, to implement a preset target, and may be completely or partially implemented by using software, hardware (such as a processing circuit or a memory) or a combination thereof. Similarly, one processor (or a plurality of processors or memories) may be configured to implement one or more modules or units. In addition, each module or unit may be a part of an overall module or unit including a function of the module or the unit.

Unless otherwise defined, meanings of all technical and scientific terms used in this specification are the same as those usually understood by a person skilled in the art to which this application belongs. Terms used in this specification are merely intended to describe objectives of the embodiments of this application, but are not intended to limit this application.

Before the embodiments of this application are further described in detail, descriptions are made on nouns and terms in the embodiments of this application, and the nouns and terms in the embodiments of this application are applicable to the following explanations.
(1) Database: A database is a warehouse for storing data, and is actually a set of a series of data files (generally, binary files). These data files record data in a specific format, and save the data in a directory of a server. When the files are collected together, a database is formed. A database is a set of files, and is a data set organized according to a data model and stored in a secondary memory.
(2) Database instance: A database instance is a database program that accesses a database. Adding, deletion, query, or modification on a file (data) in the database, and any operation, such as data definition, data query, data maintenance, or database running control, on a database file performed by a user directly through a file system is impossible and not allowed. This needs help of the database instance. In other words, these operations are performed based on the database instance. The database instance is a channel through which a user (programmer) accesses the database. Only through the database instance can the user (programmer) access the database. The database instance helps implement encapsulation on database-based operations, and also implement parsing on a structured query language (SQL), enabling the user to operate content of the database in a simple and direct manner such as the SQL language.
(3) Execution plan: An execution plan is an execution process or an access path of a query statement in a database. An execution plan includes a plurality of sequentially arranged operations. Each operation includes a plurality of operators. The operator is a specific action for performing each operation. For example, operation A in an execution plan of a query statement includes a SELECT operator, operation B in the execution plan includes a WHERE operator, and operation C in the execution plan includes a GROUP BY operator.
(4) Computational element: Computational elements are database modules that are in database layer structures and that are configured to perform different functions, are configured to execute each operator in a query statement, and carry specific database code of computation logic corresponding to the operator. For example, a group node module, a select node module, and an insert node module in a compiler layer structure are included.
(5) Database execution template: A database execution template is a template formed by at least one computational element (database module) of a database corresponding to a query statement in a level sequence of the computational element, and is configured to respond to the corresponding query statement. For example, a query statement 1 involves a group node module and a select node module in a compiler layer, forming a computational element set A {group node module, select node module}; involves a transitive closure module in a query rewriting layer, forming a computational element set B {transitive closure module}; and involves an index skipping module and a join calculation module in a query path selection layer, forming a computational element set C {index skipping module, join calculation module}. The computational element set A to a computational element set G are sorted in the level sequence, and a sorting result is A→B→C. Finally, database execution templates are formed based on the sorted computational element sets, to be specific, { group node module, select node module } → { transitive closure module}→{index skipping module, join calculation module}.
(6) Sample query statement: A sample query statement is a query statement generated by an application program running in an electronic device in a stage of constructing a database instance, and is configured for performing a particular operation on a database. Using an example in which the application program is an instant messaging client, the query statement may be configured for querying a current social relationship of a user, or querying a message received or sent by the user in a specific time period.
(7) Target query statement: After a database instance is constructed, a query statement generated by an application program running in an electronic device may be responded to by preferentially using the database instance.

In the related art, a dynamic database compiling technology refers to performing determining and compiling in an execution process. Using just-in-time (JIT) compiling as an example for description, the JIT compiling is a process of converting an interpreted program into a native program during running. The JIT compiling is mainly beneficial when queries are intensely performed on a central processing unit that runs for a long time. Generally, all these queries are analytical. For a short query, overheads of performing the JIT compiling are often higher than costs of time that can be saved in performing the JIT compiling. First, if estimated costs are higher than estimated costs set for JIT, a short function and an operator in the query are inline. Next, if the estimated costs are higher than the estimated costs set for JIT, generated code is improved at huge costs. These options all increase the overheads of performing the JIT compiling.

Embodiments of this application provide a database instance processing method and apparatus, an electronic device, a computer-readable storage medium, and a computer program product, to improve query efficiency of a query statement and resource utilization of a database.

An exemplary application of the electronic device provided in the embodiments of this application is described below. The electronic device provided in the embodiments of this application may be implemented as various types of user terminals such as a notebook computer, a tablet computer, a desktop computer, a set-top box, a mobile device (for example, a mobile phone, a portable music player, a personal digital assistant, a dedicated messaging device, or a portable game device), or may be implemented as a server. An exemplary application in which the electronic device is implemented as a server is described below.

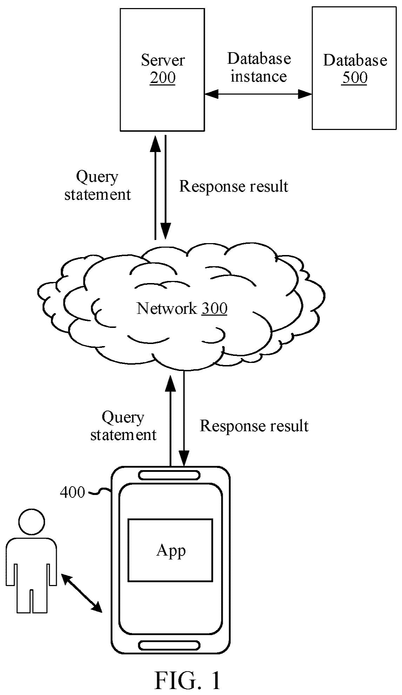

FIG. 1 is a schematic structural diagram of a database instance processing system according to an embodiment of this application. A terminal 400 is connected to a server 200 through a network 300. The network 300 may be a wide area network, a local area network, or a combination thereof.

In some embodiments, the database instance processing method provided in this embodiment of this application may be collaboratively implemented by a terminal and a server. The terminal 400 receives an operation of a user using an application program in an electronic device and sends operation data to the server 200. The server 200 detects, from the operation data, a sample query statement for a database 500 that is generated by the user during use of the application program, and obtains at least one computational element of a database corresponding to each sample query statement; forms, for each sample query statement based on the at least one computational element of the database corresponding to the sample query statement, a database execution template corresponding to the sample query statement; screening out a target database execution template from a plurality of database execution templates corresponding to a plurality of sample query statements; and generates a database instance corresponding to each target database execution template, any database instance being configured to respond, when being executed, to a target query statement corresponding to the any database instance. The terminal 400 receives a target operation of a user using an application program, and sends target operation data to the server 200. The server 200 detects, from the target operation data, a target query statement generated by the user during use of the application program. The target query statement has a corresponding database instance. The server 200 executes the database instance corresponding to the target query statement, to obtain a response result from the database 500, and returns the response result to the terminal 400 for presentation.

In some embodiments, the database instance processing method provided in this embodiment of this application may alternatively be separately implemented by a terminal or a server. That the database instance processing method is separately implemented by a terminal is used as an example for description. The terminal 400 receives the operation of the user using the application program in the electronic device, detects, from the operation data, the sample query statement for the database 500 that is generated by the user during use of the application program, and obtains at the least one computational element of the database corresponding to each sample query statement; forms, for each sample query statement, the database execution template of the sample query statement by using database code of the at least one computational element of the database corresponding to the sample query statement; screening out a target database execution template from the plurality of database execution templates corresponding to the plurality of sample query statements; and generates the database instance corresponding to each target database execution template, the any database instance being configured to respond, when being executed, to the target query statement corresponding to the any database instance. The terminal 400 receives the target operation of the user using the application program, and detects, from the target operation data, the target query statement generated by the user during use of the application program. The target query statement has the corresponding database instance. The terminal 400 executes the database instance corresponding to the target query statement, to obtain the response result from the database 500, and presents the response result on the terminal 400.

In some embodiments, the server 200 may be an independent physical server, or may be a server cluster or a distributed system formed by a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400 may be, but is not limited to, a smartphone, a tablet computer, a notebook computer, a desktop computer, a smart speaker, a smartwatch, a smart voice interaction device, a smart appliance, an in-vehicle terminal, an aircraft, or the like. The terminal and the server may be connected directly or indirectly in a wired or wireless communication manner. This is not limited in the embodiments of this application.

A cloud technology is a collective name of a network technology, an information technology, an integration technology, a platform management technology, an application technology, and the like based on application of a cloud computing business mode. The technologies may form a resource pool for use on demand, which is flexible and convenient. A cloud computing technology will become an important support. A backend service of a technical network system requires a lot of computing and storage resources, such as video websites, image websites, and more portal websites. With the rapid development and application of the internet industry, each item may have its own identification mark in the future, and the identification marks need to be transmitted to a backend system for logical processing. Data of different levels is processed separately, and all kinds of industry data require a strong system support, which can be achieved only through the cloud computing.

In some embodiments, the terminal or the server may run a computer program to implement the database instance processing method provided in the embodiments of this application. For example, the computer program may be an original program or a software module in an operating system, or may be a native application (APP) program, that is, a program that needs to be installed in the operating system to run or a program that can be run only after being downloaded to a browser environment. In summary, the foregoing computer program may be an application program, a module, or a plug-in in any form.

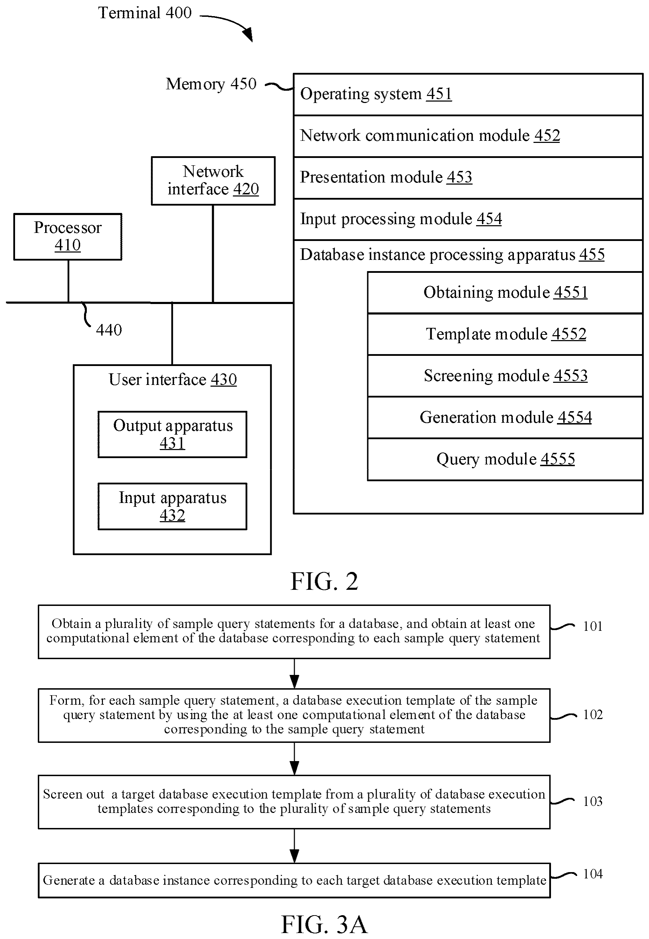

FIG. 2 is a schematic structural diagram of an electronic device according to an embodiment of this application. Using an example in which the electronic device is implemented as a terminal, the terminal 400 shown in FIG. 2 includes: at least one processor 410, a memory 450, at least one network interface 420, and a user interface 430. Components in the terminal 400 are coupled together via a bus system 440. The bus system 440 is configured for implementing connection and communication between the components. In addition to a data bus, the bus system 440 also includes a power bus, a control bus, and a status signal bus. However, for clear description, various buses are marked as the bus system 440 in FIG. 2.

The processor 410 may be an integrated circuit chip having a signal processing capability, for example, a general-purpose processor, a digital signal processor (DSP), or another programmable logic device, a discrete gate, a transistor logic device, or a discrete hardware component. The general-purpose processor may be a microprocessor, any conventional processor, or the like.

The user interface 430 includes one or more output apparatuses 431 that enable presentation of media content, including at least one of the following: one or more speakers, and one or more visual display screens. The user interface 430 further includes one or more input apparatuses 432, including user interface components that facilitate user input, such as a keyboard, a mouse, a microphone, a touchscreen, a camera, and other input buttons and controls.

The memory 450 may be removable, irremovable, or a combination thereof. Exemplary hardware devices include a solid-state memory, a hard disk drive, an optical disk drive, and the like. The memory 450, in some embodiments, includes one or more storage devices physically away from the processor 410.

The memory 450 includes a volatile memory or a non-volatile memory, or may include both the volatile memory and the non-volatile memory. The non-volatile memory may be a read-only memory (ROM). The volatile memory may be a random access memory (RAM). The memory 450 described in this embodiment of this application is intended to include any suitable type of memory.

In some embodiments, the memory 450 can store data to support various operations. Examples of the data include a program, a module, and a data structure, or a subset or a superset thereof. An exemplary description is given below.

An operating system 451 includes system programs configured to process various basic system services and perform hardware-related tasks, for example, a framework layer, a core library layer, and a driver layer, which are configured to implement various basic services and process hardware-based tasks.

A network communication module 452 is configured to reach another electronic device via one or more (wired or wireless) network interfaces 420. An exemplary network interface 420 includes: Bluetooth, wireless fidelity (Wi-Fi), a universal serial bus (USB), and the like;
a presentation module 453, configured to enable presentation of information through one or more output apparatuses 431 (for example, a display screen or a speaker) associated with the user interfaces 430 (for example, a user interface configured to operate a peripheral device and display content and information); and
an input processing module 454, configured to detect one or more user inputs or interactions from one of the one or more input apparatuses 432 and translate the detected inputs or interactions.

In some embodiments, a database instance processing apparatus provided in the embodiments of this application may be implemented by using software. FIG. 2 shows a database instance processing apparatus 455 stored in the memory 450, which may be software in a form of a program, a plug-in, or the like, and include the following software modules: an obtaining module 4551, a template module 4552. a screening module 4553, a generation module 4554, and a query module 4555. These modules are logical modules, and therefore may be randomly combined or further split based on the implemented functions. The functions of the modules are to be described below.

The database instance processing method provided in the embodiments of this application is described with reference to exemplary applications and implementations of the electronic device provided in the embodiments of this application.

As described above, the electronic device for implementing the database instance processing method according to the embodiments of this application may be a terminal, a server, or a combination thereof. Therefore, an execution entity of each operation is not repeatedly described below.

Referring to FIG. 3A, a database instance processing method provided in an embodiment of this application may be applied to a terminal or a server. Descriptions are provided with reference to operation 101 to operation 104 shown in FIG. 3A.

Operation 101: Obtain a plurality of sample query statements for a database, and obtain at least one computational element of the database corresponding to each sample query statement.

In an example, a full quantity of query statements for the database may be obtained, and are used as the sample query statements. In other words, each time a query statement for a target object is received, the query statement for the target object is recorded. The target object herein may be a target object or may be a plurality of target objects.

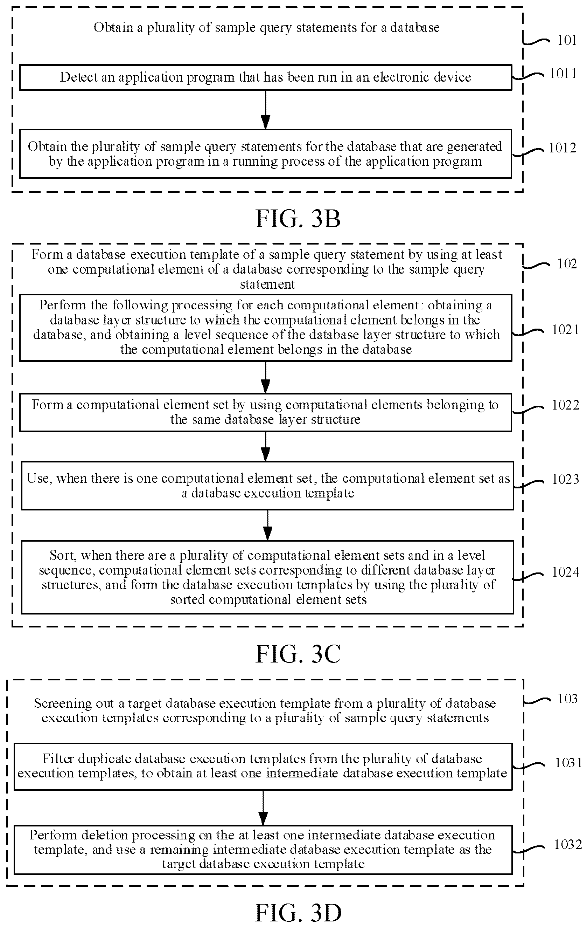

In some embodiments, referring to FIG. 3B, the obtaining the plurality of sample query statements for the database in operation 101 may be implemented through operation 1011 and operation 1012 shown in FIG. 3B.

Operation 1011: Detect an application program that has been run in an electronic device.

In an example, application programs of one or more target objects that have been run in the electronic device within a recent period of time (for example, one month) may be detected. The application programs herein may be all used application programs, or may be an application program whose use frequency exceeds an application program frequency threshold.

Operation 1012: Obtain the plurality of sample query statements for the database that are generated by the application program in a running process of the application program.

In an example, the application program may be any application program needing to use a database, for example, a social APP. The sample query statement may be a sample query statement used by a user when the user uses the social APP.

For example, the sample query statement may be configured for obtaining a social relationship, or may be configured for obtaining chatting content within a particular time period.

The database may refer to a database, for example, a plurality of query statements for a database A in a process in which the user uses the social APP are detected. Because different databases have different level frameworks, if there are a plurality of databases, the data processing method provided in the embodiments of this application may be separately performed for each database.

In an example, the sample query statement for the database is extracted from data of an application program used by the target object, and the sample query statement involved in the application program is marked. The marking may be representing the sample query statement by using an identifier. For example, a query statement 1 is marked by using an identifier A, and a query statement 2 is marked by using an identifier B. Therefore, when the query statements are processed subsequently, the query statements can be distinguished by using marks. The method is specifically configured to analyze an application program used by a user, and record query statements that may be involved in the application program used by the user.

The plurality of query statements for the database in a process in which the target object uses the application program is detected in this embodiment of this application. In other words, the obtained plurality of query statements are all query statements that are used in an actual use process. Therefore, the query statements obtained through this embodiment of this application are more targeted in terms of satisfying a user requirement, thereby providing an effective basis for generation of a database instance subsequently, and enhancing a generation value of the database instance.

In some embodiments, the obtaining at least one computational element of the database corresponding to each sample query statement in operation 101 may be implemented through the following technical solution: performing level division processing on the database, to obtain a plurality of database layer structures of the database, each database layer structure including at least one candidate computational element; performing the following processing for each sample query statement: obtaining an execution plan of the sample query statement, and performing decomposition processing on the execution plan, to obtain at least one operator needed by the execution plan; and obtaining a computational element configured for executing the operator from a plurality of candidate computational elements of the plurality of database layer structures.

According to this embodiment of this application, a computational element necessary for executing the sample query statement may be obtained from a level of the execution plan of the sample query statement, thereby implementing modularized customization of the query statement.

In an example, the execution plan is a description of an execution process or an access path of the query statement for the database. Because the query statements are all query statements for the database that are generated by a user during use of an application program, the query statements have been actually used. A database in the related art can provide a function of downloading the execution plan, and the execution plan of the query statement can be obtained in a manner of direct downloading.

In an example, the operator refers to a specific action of each operation in the execution plan corresponding to the query statement. Because the execution plan is a process of executing the query statement in the database, the execution plan may include a plurality of operations arranged in sequence and the specific action of each operation. For example, operation A "SELECT T1.C1 FROM T1, T2" in the execution plan includes a SELECT operator, operation B "WHERE T1.C2=T2.C2 AND T2.C2=1" in the execution plan includes a WHERE operator, and operation C "GROUP BY T1.C1" in the execution plan includes a GROUP BY operator. The execution plan is decomposed in operation dimensions, to obtain the plurality of operations included in the execution plan, and separately obtain an operator included in each operation. The operator is computation logic, and the computational element is a database module configured to execute the computation logic. The database module carries specific database code corresponding to the computation logic.

In some embodiments, the performing level division processing on the database, to obtain a plurality of database layer structures of the database may be implemented through the following technical solution: obtaining a plurality of types of functions involved in the database; and dividing the database into the plurality of database layer structures based on the plurality of types of functions.

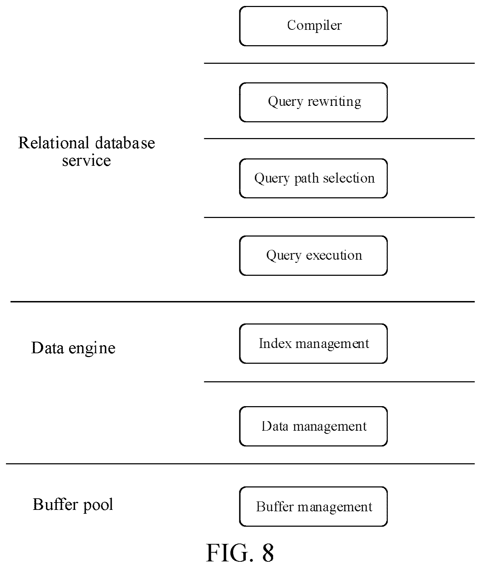

In an example, referring to FIG. 8, a database may be generally divided based on the following levels, to obtain the following plurality of database layer structures: a compiler layer, a query rewriting layer, a query path selection layer, a query execution layer, an index management layer, a data management layer, and a buffer management layer. Each database layer structure includes a plurality of candidate computational elements. The computational elements are database modules configured to perform different functions in the layer structure.

The compiler layer is configured to parse a query statement, detect a syntax error, and convert the query statement into an internal representation form, for example, an abstract syntax tree. The query rewriting layer is configured to parse the abstract syntax tree. For many query statements involved in a rewriting rule, grammar checking is performed, for example, based on a constraint rule. For example, a selection statement is optimized according to a particular condition, and a plurality of conditions are combined into one condition expression. However, some grammars do not need to be checked, for example, an exchange sequence rule and a renaming rule. The query path selection layer is configured to evaluate execution time, resource consumption, and an error rate of a query path, calculate overheads of the query path, and select an execution path having the lowest overheads as an optimal execution plan. The query execution layer is configured to execute query of a user according to a generated query plan. The index management layer is configured to support database indexing. The database has a plurality of index types and operations, and usually, only some of functions are used when the user performs query. The data management layer is configured to support data page management of the database. There are also a plurality of types and operations of data pages. The data management layer is similar to the index management layer. The buffer management layer is configured to manage a database buffer, including allocation, recycling, and replacement policies of the database buffer.

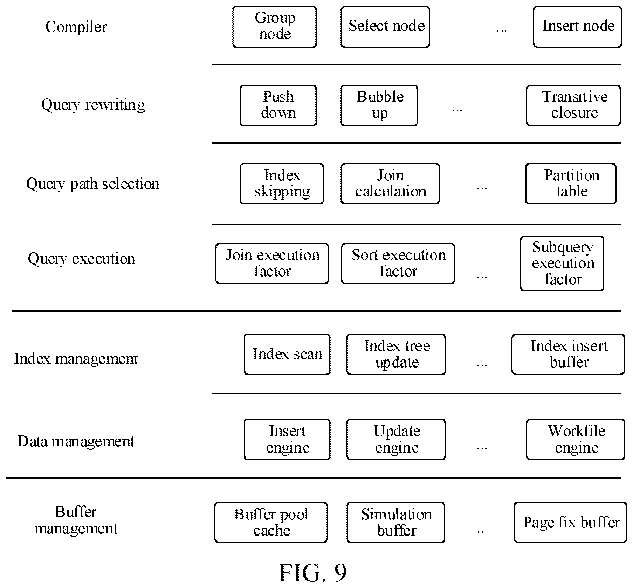

Referring to FIG. 9, each level of a database may be further divided into different database modules based on specific functions of different levels. A compiler layer includes a group node module, a select node module, an insert node module, and the like. A query rewriting layer includes a push down module, a bubble up module, and a transitive closure module. A query path selection layer includes an index skipping module and a join calculation module. A query execution layer includes a join execution factor module, a sort execution factor module, and a subquery execution factor module. An index management layer includes an index scan module, an index tree update module, and an index insert buffer module. A data management layer includes an insert engine module, an update engine module, and a workfile engine module. A buffer management layer includes a buffer pool cache module, a simulation buffer module, and a page fix buffer module.

The group node module in the compiler layer is configured to process query compiling and optimization in a distributed environment. The select node module is configured to determine a database node that executes a query statement. The insert node module is configured to perform an operation of inserting the database node. The push down module in the query rewriting layer is configured to optimize an execution plan corresponding to the query statement, and may rewrite some complex query statements to simpler query statements, so that a database engine can execute the query statements more quickly. The bubble up module is configured to perform iterative processing on an expression in the query statement, compare neighboring computational elements, and perform exchange, to better satisfy an optimization target of the query statement, such as reducing nested queries and using an index. The transitive closure module is configured to generate additional association information and supplementary data by calculating transitive closure in scenarios such as query statement optimization and data integrity check. The index skipping module in the query path selection layer is configured to indicate a hop count of each node corresponding to the query statement in path selection. The join calculation module is configured to calculate overheads of a query path involved in the query statement. The join execution factor module in the query execution layer is configured to calculate and determine a join relationship between two or more computational elements. The sort execution factor module is configured to classify computational elements involved in the query statement. The subquery execution factor module is configured to execute a subquery statement, and uses a result of the subquery statement as a part of a main query statement for processing. The subquery statement is a query statement nested inside the main query statement, and may be nested in a select, update, delete, or insert query statement, or the like. The index scan module in the index management layer is configured to locate and obtain data that satisfies a query condition in an index structure. The index tree update module is configured to maintain and update an index tree structure in the database. The index tree is a data structure and is used to accelerate database query. When data in the database changes, such as an insert, update, or delete operation is performed, the index tree update module correspondingly modifies the index tree to reflect the changes. The index insert buffer module is configured to: The insert engine module in the data management layer is configured to process an insert operation of an index. The update engine module is configured to receive, parse, and perform operations such as insertion, update, and deletion, apply these updates to a database table. The update engine module is further configured to process submission and rollback of a transaction, to ensure consistency and integrity of data, and may further process concurrent update operations, to ensure that a plurality of update operations performed simultaneously do not interfere with each other or conflict with each other. The workfile engine module is configured to manage operations such as creation, deletion, moving, and search in an execution process of the query statement. The buffer pool cache module in the buffer management layer is configured to manage caching of a database page in a database system. The database page is a basic unit for storing data. The simulation buffer module is configured to provide cache access for data in the database. The page fix buffer module is configured to manage and maintain a locked state of the database page.

In an example, each query statement uses only some database modules at a database level. The following query statement is used as an example.
SELECT T1.C1 FROM T1, T2
WHERE T1.C2=T2.C2
   AND T2.C2=1
GROUP BY T1.C1

Decomposition processing is performed on the execution plan corresponding to the query statement, to obtain at least one operator needed by the execution plan, including a SELECT operator, a Group By operator, and a JOIN operator. The SELECT operator and the Group By operator may be directly embodied in the query statement. Although the JOIN operator is not directly embodied in the query statement, computation logic represented by the JOIN operator needs to be used in the execution plan during actual application. Subsequently, database modules (computational elements) involved in each layer used for executing the foregoing operator may be obtained.

The SELECT operator is configured to select a column or an expression to be retrieved from the database. For example, "SELECT T1.C1 FROM T1, T2" in the foregoing example indicates that a table T1 and a table T2 are queried, and a column C1 in the table T1 is selected. The Group By operator is configured to group query results based on specified columns. For example, "GROUP BY T1.C1" in the foregoing example indicates that query results are grouped based on the column T1.C1, and data with the same value is grouped into one group. The JOIN operator is configured to retrieve associated data from a plurality of tables, to perform combined analysis or operations. For example, in the foregoing example, the JOIN operator is configured to retrieve data satisfying a query condition "WHERE T1.C2=T2.C2 AND T2.C2=1" from the table T1 and the table T2, so that the found data can be grouped subsequently through the Group By operator.

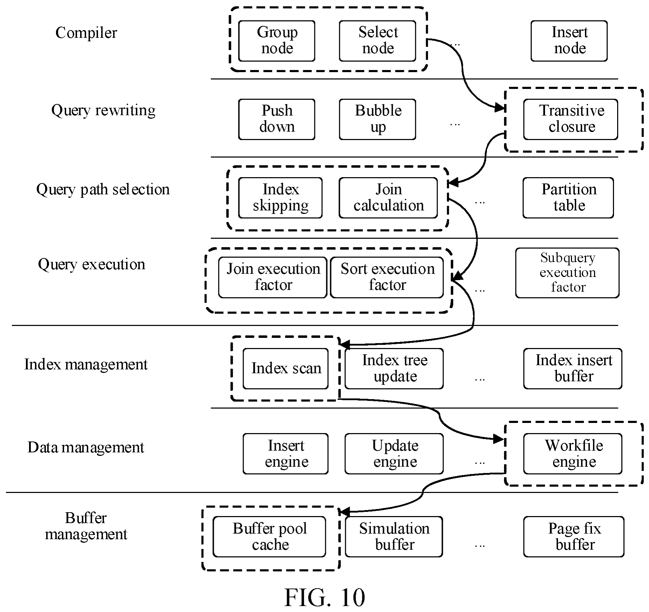

As shown in FIG. 10, database modules in dashed boxes are database modules involved in each layer, including: a group node module and a select node module in a compiler layer; a transitive closure module in a query rewriting layer; an index skipping module and a join calculation module in a query path selection layer; a join execution factor module and a sort execution factor module in a query execution layer; an index scan module in an index management layer; a workfile engine module in a data management layer; and a buffer pool cache module in a buffer management layer.

In an example, the select node module in the compiler layer, the transitive closure module in the query rewriting layer, the index skipping module in the query path selection layer, the index scan module in the index management layer, the workfile engine module in the data management layer, and the buffer pool cache module in the buffer management layer need to be configured for executing a SELECT operator.

In an example, the group node module in the compiler layer, the transitive closure module in the query rewriting layer, and the sort execution factor module in the query execution layer need to be configured for executing a Group By operator.

In an example, the join calculation module in the query path selection layer and the join execution factor module in the query execution layer need to be configured for executing a JOIN operator.

Operation 102: Form, for each sample query statement, a database execution template of the sample query statement by using the at least one computational element of the database corresponding to the sample query statement.

In some embodiments, referring to FIG. 3C, the forming the database execution template of the sample query statement by using at least one computational element of the database corresponding to the sample query statement in operation 102 may be implemented by performing operation 1021 to operation 1024 shown in FIG. 3C.

Operation 1021: Perform the following processing for each computational element: obtaining a database layer structure to which the computational element belongs in the database, and obtaining a level sequence of the database layer structure to which the computational element belongs in the database.

In an example, an overall database structure includes a plurality of sequentially connected database layer structures. Each database layer structure includes a plurality of candidate computational elements, and these candidate computational elements are at least one piece of database code corresponding to different computation logic. An execution process of the query statement is implemented by executing each piece of database code in a level sequence of the database. In other words, each candidate computational element has a corresponding database layer structure in the overall database structure. Therefore, the database layer structure to which the candidate computational element belongs may be directly found from the overall database structure. The level sequence of each database layer structure in the database may be stored in a table based on a mapping relationship between the database layer structure and the level sequence, or the level sequence corresponding to each database layer structure may be stored as attribute information of the database layer structure.

In an example, the computational elements obtained through operation 101 are not necessarily from all database layer structures of the database. In other words, when some query statements are executed, only some database layer structures may be used. Therefore, the database layer structure to which any computational element belongs and the level sequence of the database layer structure in the database may be obtained through operation 1021. As shown in FIG. 8, a level sequence of a compiler layer ranks first, and a level sequence of a buffer management layer ranks last.

Operation 1022: Form a computational element set by using computational elements belonging to the same database layer structure.

In an example, referring to FIG. 10, a computational element set is formed by using the group node module and the select node module in the compiler layer. A computational element set is formed by using the transitive closure module. The group node module, the select node module, and the transitive closure module are all computational elements.

Operation 1023: Use, when there is one computational element set, the computational element set as a database execution template.

In an example, when there is only one computational element set, which represents that all computational elements are from one database layer structure. Therefore, the computational element set is used as the database execution template.

Operation 1024: Sort, when there are a plurality of computational element sets and in a level sequence, computational element sets corresponding to different database layer structures, and form the database execution templates by using the plurality of sorted computational element sets.

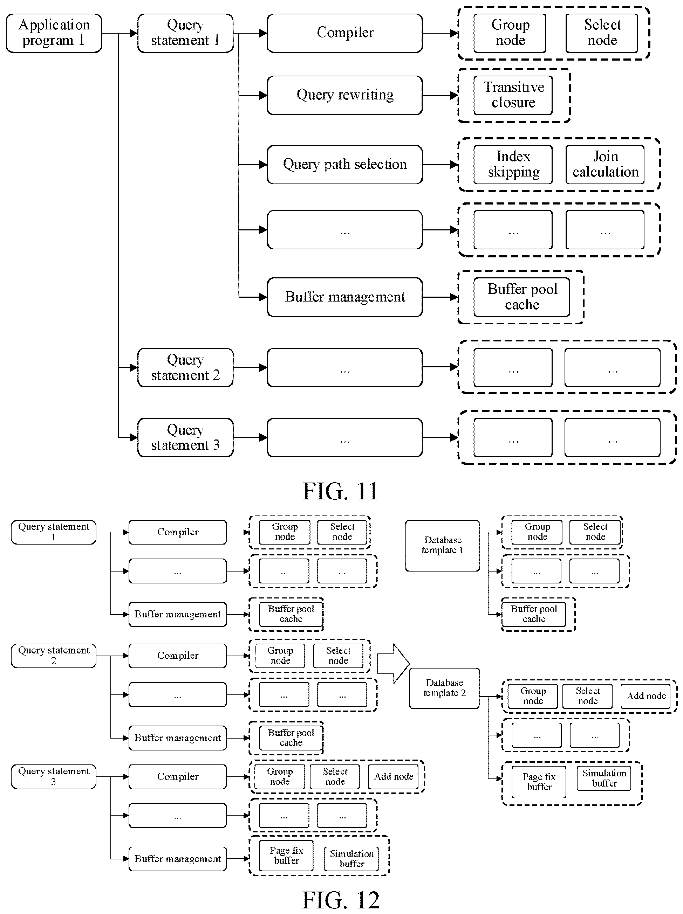

In an example, referring to FIG. 11, a query statement 1 involves a group node module and a select node module in a compiler layer, forming a computational element set A; involves a transitive closure module in a query rewriting layer, forming a computational element set B; involves an index skipping module and a join calculation module in a query path selection layer, forming a computational element set C; involves a join execution factor module and a sort execution factor module in a query execution layer, forming a computational element set D; involves an index scan module in an index management layer, forming a computational element set E; involves a workfile engine module in a data management layer, forming a computational element set F; and involves a buffer pool cache module in a buffer management layer, forming a computational element set G. The computational element set A to the computational element set G are sorted in a level sequence, and database execution templates are formed by using the sorted computational element sets. In other words, the database execution templates can further represent an invoking sequence of the computational elements.

Operation 103: screening out a target database execution template from a plurality of database execution templates corresponding to the plurality of sample query statements.

In some embodiments, referring to FIG. 3D, the screening out a target database execution template from the plurality of database execution templates corresponding to the plurality of sample query statements in operation 103 may be implemented through operation 1031 and operation 1032 shown in FIG. 3D.

Operation 1031: Filter duplicate database execution templates from the plurality of database execution templates, to obtain at least one intermediate database execution template.

In some embodiments, if two or more same database execution templates exist in the plurality of database execution templates, redundancy filtering processing is performed on the duplicate database execution templates. Only one of the same database execution templates is reserved, to obtain the at least one intermediate database execution template.

In an example, if there are two same database execution templates A and B, either of the two database execution templates A and B is deleted. Therefore, reserved database execution templates are different from each other.

Operation 1032: Perform deletion processing on the at least one intermediate database execution template, and use a remaining intermediate database execution template as the target database execution template.

In some embodiments, the performing deletion processing on the at least one intermediate database execution template, and using the remaining intermediate database execution template as the target database execution template may be implemented through the following technical solution: The following processing is performed for each intermediate database execution template: obtaining a sample query statement corresponding to the intermediate database execution template; deleting, when the sample query statement corresponding to the intermediate database execution template satisfies a deletion condition, the intermediate database execution template; and using the remaining intermediate database execution template obtained after deletion is performed as the target database execution template.

According to this embodiment of this application, a quantity of target database execution templates can be simplified, to avoid resource occupation of the database by a redundant database execution template or a database execution template having low utilization, thereby improving resource utilization of the database.

In some embodiments, the deletion condition includes at least one of the following: a quantity of times that the sample query statement corresponding to the intermediate database execution template is executed is less than a quantity of times threshold; and a quantity of computational elements involved in the sample query statement corresponding to the intermediate database execution template is greater than a computational element quantity threshold.

The quantity of times threshold and the computational element quantity threshold may be flexibly set according to different requirements of the user and actual conditions.

In this embodiment of this application, importance of the database execution template is evaluated based on the quantity of times that the sample query statement corresponding to the intermediate database execution template is executed and the quantity of computational elements involved in the sample query statement corresponding to the intermediate database execution template, to make a decision of deletion or reservation. Such a dynamic customized database management method can improve efficiency and resource utilization of a database, and adapt to different application scenarios and service requirements.

In this embodiment of this application, the database execution templates are screened, so that a database resource may be used in a query statement that is frequently used, thereby improving query efficiency. In addition, if the quantity of computational elements of the intermediate database execution template is high, and even is close to that of a full quantity of standard database instances, costs of generating a database instance are excessively high. Therefore, these database execution templates are deleted, to improve the resource utilization of the database.

In an example, a quantity of times that the database execution template is used is determined according to a quantity of times that the sample query statement is executed. If a use proportion of some database execution templates is excessively small, these database execution templates are deleted, and sample query statements corresponding to these database execution templates are executed by using standard database instances.

Operation 104: Generate a database instance corresponding to each target database execution template, any database instance being configured to respond, when being executed, to a target query statement corresponding to the any database instance.

In some embodiments, the database includes a plurality of database layer structures, and any computational element belongs to one database layer structure. The generating the database instance corresponding to each target database execution template in operation 104 may be implemented through the following technical solution: The following processing is performed for each target database execution template: obtaining at least one computational element of the target database execution template, and obtaining database code of each computational element; encapsulating database code of the computational elements belonging to the same database layer structure, to obtain database code corresponding to the database layer structure; and encapsulating database code of the plurality of database layer structures in the level sequence of the database layer structures, to obtain the database instance corresponding to the target database execution template.

In this embodiment of this application, the manner of encapsulating, in the level sequence of the database layer structures, database code corresponding to the plurality of computational elements can ensure isolation between the computational elements. As a result, the computational elements do not interfere with each other, stability of the database code corresponding to the computational elements in an execution process is improved, and finally, normal execution of the database instance can be ensured.

In an example, each computational element carries a piece of database code. Based on the obtained database execution template, encapsulation may be performed according to an invoking relationship between the computational elements. In other words, database code of the computational elements in the same database layer structure is encapsulated first, and different computational elements in the same database layer structure are isolated from each other. Then, database code of different database layer structures is encapsulated in the level sequence, to implement isolation between the database layer structures.

In some embodiments, after operation 104 is performed, the following technical solution may be further performed: obtaining a target query statement; obtaining, when a first database execution template corresponding to the target query statement belongs to the target database execution template, a database instance corresponding to the first database execution template; and executing the database instance corresponding to the first database execution template, to obtain a query result used to respond to the target query statement.

According to this embodiment of this application, the target query statement is obtained. When the first database execution template corresponding to the target query statement belongs to the target database execution template, the database instance of the first database execution template may be directly executed to respond to the target query statement, and avoid executing a full quantity of database instances in the database. It is determined that the first database execution template corresponding to the target query statement belongs to the target database execution template in one of the following cases: the first database execution template corresponding to the target query statement is the same as one of multiple target database execution templates if there are multiple target database execution templates; and the first database execution template corresponding to the target query statement is the same as the target database execution template if there are only one target database execution template.

In an example, the target query statement is a query statement obtained in real time when a user uses an application program in an electronic device. The target query statement is parsed to obtain an execution plan of the target query statement, and the execution plan is parsed to obtain an operator. A corresponding first database execution template is determined based on the operator obtained through parsing. The database instance of the target database execution template has been generated through operation 101 to operation 104. When the first database execution template belongs to the foregoing target database execution template, the database instance corresponding to the first database execution template may be obtained, and the obtained database instance is executed, to obtain the query result used to respond to the target query statement.

In some embodiments, when the first database execution template corresponding to the target query statement does not belong to the target database execution template, a full quantity of database instances (which is also referred to the standard database instances) are obtained. The full quantity of database instances include candidate computational elements of all database layer structures in the database. A full quantity of database instances corresponding to the target query statement are executed, to obtain the query result used to respond to the target query statement.

In an example, the target query statement is a query statement obtained in real time when the user uses the application program. The target query statement is parsed to obtain the execution plan of the target query statement, and the execution plan is parsed to obtain the operator. The corresponding first database execution template is determined based on the operator obtained through parsing. The database instance of the target database execution template has been generated through operation 101 to operation 104. When the first database execution template does not belong to the foregoing target database execution template, the full quantity of database instances are directly obtained, and the obtained full quantity of database instances are executed, to obtain the query result used to respond to the target query statement. It is determined that the first database execution template corresponding to the target query statement does not belong to the target database execution template in one of the following cases: the first database execution template corresponding to the target query statement is different from any one of multiple target database execution templates if there are multiple target database execution templates; and the first database execution template corresponding to the target query statement is different from the target database execution template if there are only one target database execution template.

In this embodiment of this application, a plurality of sample query statements for the database and at least one computational element of the database corresponding to each sample query statement are obtained. For each sample query statement, a database execution template of the sample query statement is formed by using the at least one computational element of the database corresponding to the sample query statement, to obtain a database execution template corresponding to each sample query statement. Screening processing is performed on a plurality of database execution templates in a one-to-one correspondence with the plurality of sample query statements, to obtain the target database execution template. This is equivalent to simplifying the plurality of database execution templates, to avoid resource occupation of the database by a redundant database execution template or a database execution template having low utilization, thereby improving resource utilization of the database. A corresponding database instance is generated based on each target database execution template. Any database instance is configured to respond, when being executed, to the target query statement corresponding to the any database instance. Therefore, in a manner of executing customized database instances, only some database instances need to be executed to respond to the query statement. In comparison to a manner in which a full quantity of standard database instances need to be executed in the related art, a quantity of database instances that need to be executed to respond to the query statement can be reduced, and query efficiency of the query statement can be improved.

The following describes exemplary application of the embodiments of this application in an actual application scenario.

A terminal receives a historical query operation when a user uses an instant messaging client, for example, querying for friend information, content of a dialog with a friend, or comment information, and sends operation data to a server. The server obtains, from data generated by the query operations, sample query statements that are of querying for the friend information, the content of the dialog with the friend, or the comment information separately and that are for the database, and obtains the at least one computational element of the database corresponding to each sample query statement. For each sample query statement, the database execution template of the sample query statement is formed by using the at least one computational element of the database corresponding to the sample query statement. Screening processing is performed on the plurality of database execution templates in the one-to-one correspondence with the plurality of sample query statements, to obtain the target database execution template. The database instance corresponding to each target database execution template is generated, and the any database instance is configured to respond, when being executed, to the target query statement corresponding to the any database instance.

The terminal receives a target operation when the user uses the instant messaging client, for example, querying for a quantity of friends, and sends target operation data to the server. The server obtains a target query statement corresponding to the target operation data, and the target query statement has a corresponding database instance. The server executes the database instance corresponding to the target query statement, to obtain a response result about the quantity of friends from the database, and returns the response result to the terminal for presentation.

In this embodiment of this application, a query statement of the user is decomposed into database modules needed during database execution, and the corresponding database instance is obtained through compiling based on the database modules. In this embodiment of this application, modularization processing is performed on the database, to satisfy a query requirement of the database with lowest resource consumption. In this embodiment of this application, query statements executed by the user are different, database instances that are dynamically started are also different, and a quantity of database instances that are started each time is also different. Therefore, the full quantity of standard database instances do not need to be started each time.

In some embodiments, query statements involved in an application program are analyzed, and the query statements involved in the application program are marked. The application program used by the user is specifically analyzed, and the query statements that are involved in the application program used by the user are recorded. The query statements are parsed, corresponding database modules in the query statements are recorded, and the corresponding database modules are marked based on the database modules involved in the query, to obtain a group of database execution templates.

In an example, an application program used by a database user when performing database query is obtained, query statements used by the database user are obtained, and the query statements are detected through a detection module. Specifically, the following processing is included: First, the query statements of the user are parsed, to generate an execution plan. Then the execution plan is parsed, to obtain operators needed by the execution plan. The execution plan of the database includes different operators, for example, a full-table scan. The operators involved in the execution plan may be obtained through parsing. Second, each level of the database may be further divided, based on specific work at different levels of the database, into database modules having different sub-functions. Third, a database module involved in each query statement is recorded based on the operators involved in the execution plan and the sub-function of each database module. Fourth, the corresponding database modules are marked based on the database modules involved in the query statements, to obtain a group of database execution templates.

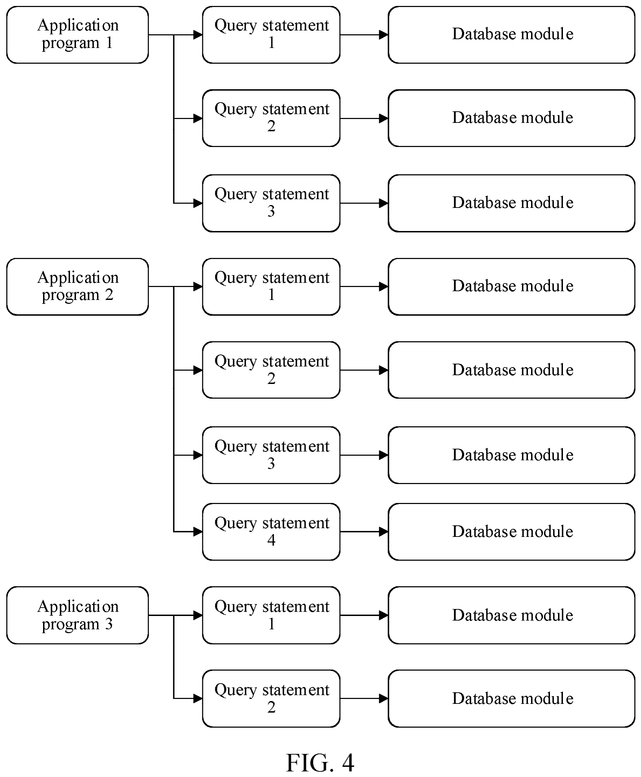

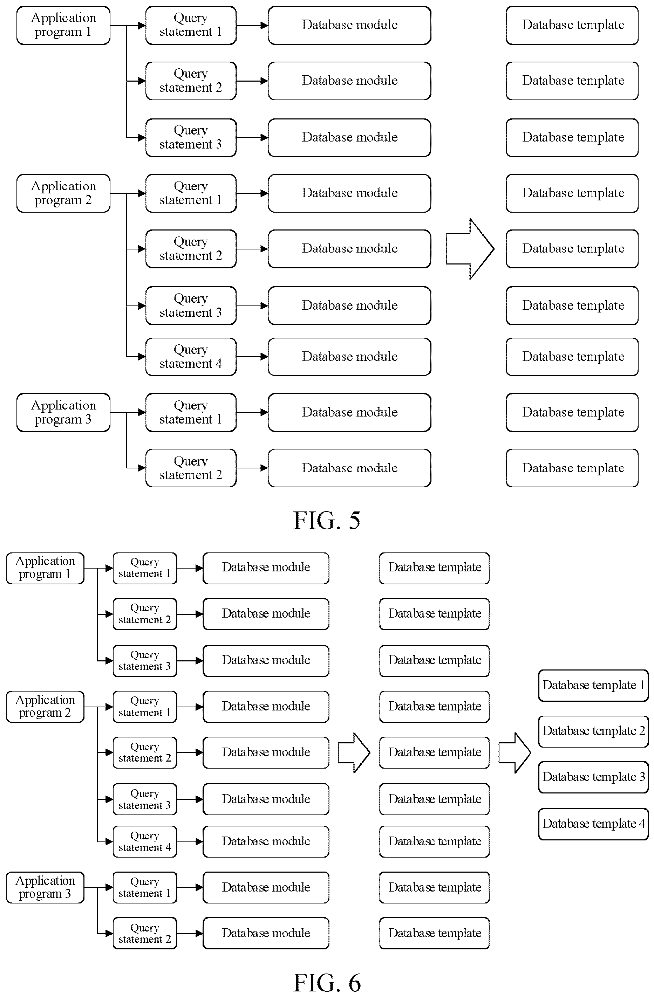

In some embodiments, referring to FIG. 4, a user uses an application program 1, an application program 2, and an application program 3. When the user uses the application program 1, a query statement 1, a query statement 2, and a query statement 3 are used. When the user uses the application program 2, the query statement 1, the query statement 2, the query statement 3, and a query statement 4 are used. When the user uses the application program 3, the query statement 1 and the query statement 2 are used. The application program 1 shown in FIG. 4 involves three query statements. Each query statement corresponds to different database modules. The query statements of the application programs may be parsed to obtain an information structure shown in FIG. 4. Referring to FIG. 5, based on FIG. 4, at least one database module corresponding to each query statement forms a database execution template corresponding to each query statement.

In some embodiments, after the database execution template of each query statement is obtained, a template set of the database instance is generated. As described above, the database modules are analyzed according to the query statement, to obtain database modules involved in the query statement, and a group of database modules involved in the query statement are combined into a template of a database instance. The generated database execution template is added to a database execution template set. Whether there are the same database execution templates in the set is compared, to combine the same database execution templates. A quantity of times that the database execution template corresponding to each query statement is used is determined according to a quantity of times that a plurality of query statements are executed within a preset period of time. If a use proportion of some database execution templates is excessively small (for example, less than a proportion threshold), these database execution templates are deleted, and query statements corresponding to these database execution templates are executed by using standard database instances.

In an example, based on FIG. 5, FIG. 6 further shows a change process of combining nine database execution templates (that is, deleting duplicated database execution templates), to obtain a database execution template set including four database execution templates.

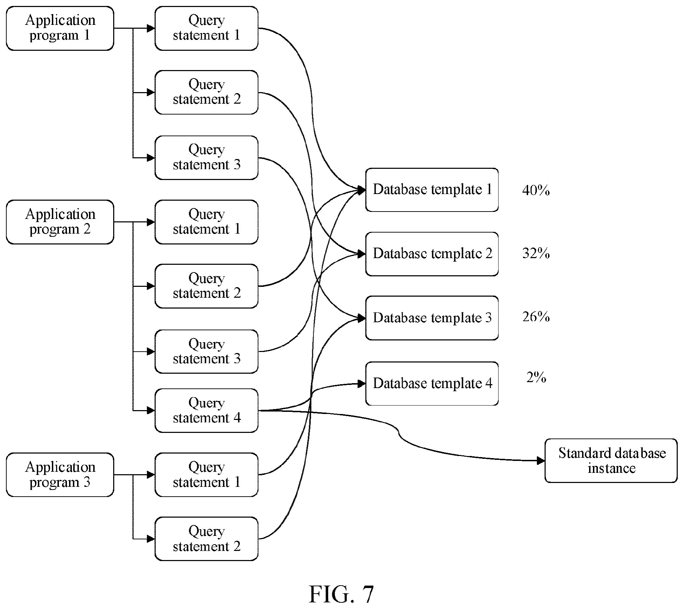

In an example, a correspondence between a query statement and the database execution template set is established according to the finally generated database execution template set. Query statements involved in an application program used by a user in a past period of time are detected, to obtain proportions of various database execution templates. This is mainly to avoid occupation of database system resources by database execution templates that are not frequently used. A database execution template whose proportion is less than a proportion threshold is removed, and a corresponding query statement uses a standard database instance. Referring to FIG. 7, a user uses an application program 1, an application program 2, and an application program 3. When the user uses the application program 1, a query statement 1, a query statement 2, and a query statement 3 are used. When the user uses the application program 2, the query statement 1, the query statement 2, the query statement 3, and a query statement 4 are used. When the user uses the application program 3, the query statement 1 and the query statement 2 are used. Each query statement has a corresponding database execution template. After combination and deletion, there are four remaining database execution templates, namely, a database execution template 1, a database execution template 2, a database execution template 3, and a database execution template 4. Each database execution template has a respective use proportion. Since a proportion of the database execution template 4 is the smallest, the database execution template 4 is deleted, the remaining database execution templates including the database execution template 1, the database execution template 2 and the database execution template 3 are determined as the target database execution templates, and the standard database instance is used when the corresponding query statement 4 is executed.

In this embodiment of this application, the database is modularized. During compiling of a database program, compiling is performed according to involved database modules, to generate a corresponding database instance. Subsequently, different database instances are used for execution according to different query statements. The database instance includes only database code that can support the database modules involved in the database execution template. For example, if the query statement includes only a full-table scan and a comparison operation, and a database program corresponding to the full-table scan and the comparison operation is generated, the database program is much smaller than a complete standard database instance, so that execution efficiency is high.

In some embodiments, referring to FIG. 8, the database may be generally divided based on the following levels. A compiler layer is configured to: parse the query statement. The query statement can be identified by the database only after being parsed first. The query statement is parsed into an abstract syntax tree. Since all grammars need to be supported, parsing of all grammars is included. A query rewriting layer is configured to: parse the abstract syntax tree. For many rewriting rules, grammar checking needs to be performed, for example, based on a constraint rule. For example, a selection statement is optimized according to a particular condition, and a plurality of conditions are combined into one condition expression. However, some grammars do not need to be checked, for example, an exchange sequence rule and a renaming rule, which do not involve specific grammar rules. A query path selection layer is configured to: evaluate execution time, resource consumption, and an error rate of a query path, calculate overheads of the query path, and select an execution path having the lowest overheads as an optimal execution plan. A query execution layer is configured to: execute query of a user according to a generated query plan. An index management layer is configured to: support database indexing. A database has a plurality of index types and operations, and usually, only some of the functions are used when the user performs query. A data management layer is configured to: support data page management of the database. There are also a plurality of types and operations of data pages. The data management layer is similar to the index management layer. A buffer management layer is configured to: manage database buffers. There are a plurality of different management manners for the buffer management, but only some of the management manners may be used in an application of the user.

In some embodiments, referring to FIG. 9, each level of the database may be further divided into the different database modules based on the specific work at the different levels. The compiler layer includes the group node module, the select node module, the insert node module, and the like. The query rewriting layer includes the push down module, the bubble up module, and the transitive closure module. The query path selection layer includes the index skipping module and the join calculation module. The query execution layer includes the join execution factor module, the sort execution factor module, and the subquery execution factor module. The index management layer includes the index scan module, the index tree update module, and the index insert buffer module. The data management layer includes the insert engine module, the update engine module, and the workfile engine module. The buffer management layer includes the buffer pool cache module, the simulation buffer module, and the page fix buffer module.

In some embodiments, each user query statement uses only some database modules at a database level. The following query statement is used as an example.
SELECT T1.C1 FROM T1, T2
WHERE T1.C2=T2.C2
   AND T2.C2=1
GROUP BY T1.C1

The query statement includes operators such as the Select operator, the Group By operator, and the Join operator. Database modules involved in each layer may be obtained after parsing. As shown in FIG. 10, the database modules in the dashed boxes are the database modules involved in each layer, including: the group node module and the select node module in the compiler layer; the transitive closure module in the query rewriting layer; the index skipping module and the join calculation module in the query path selection layer; the join execution factor module and the sort execution factor module in the query execution layer; the index scan module in the index management layer; the workfile engine module in the data management layer; and the buffer pool cache module in the buffer management layer.

In some embodiments, FIG. 11 shows more abundant detailed information based on FIG. 5. A user uses an application program 1. When the user uses the application program 1, a query statement 1, a query statement 2, and a query statement 3 are used. The query statement 1 involves a seven-layer structure of a database, which are respectively a compiler layer, a query rewriting layer, a query path selection layer, a query execution layer, an index management layer, a data management layer, and a buffer management layer. Specifically, a group node module and a select node module in the compiler layer, a transitive closure module in the query rewriting layer, an index skipping module and a join calculation module in the query path selection layer, a join execution factor module and a sort execution factor module in the query execution layer, an index scan module in the index management layer, a workfile engine module in the data management layer, and a buffer pool cache module in the buffer management layer are included.

In some embodiments, FIG. 12 shows more abundant detailed information based on FIG. 6. A query statement 1, a query statement 2, and a query statement 3 all involve a seven-layer structure of a database. The query statement 1 involves a group node module and a select node module in a compiler layer; and involves a buffer pool cache module in a buffer management layer. These modules form a database execution template; The query statement 2 involves the group node module and the select node module in the compiler layer; and involves the buffer pool cache module in the buffer management layer. These modules form a database execution template. The query statement 3 involves the group node module, the select node module, and an add node module in the compiler layer; and involves a simulation buffer module and a page fix buffer module in the buffer management layer. These modules form a database execution template. Since two of the foregoing three database execution templates are the same, two different database execution templates are reserved through combining.

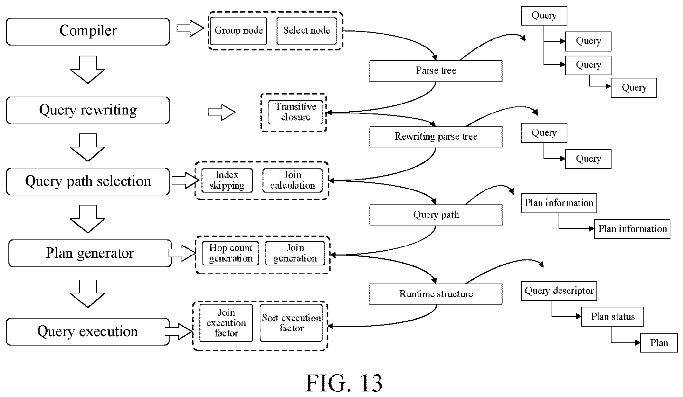

Finally, a non-standard database instance is generated according to database modules included in the database execution template. Since database instances are sequentially implemented by layers, a corresponding non-standard database instance can be generated provided that each database layer is correspondingly isolated. FIG. 13 shows a five-layer structure of a database involved in a query statement and an execution sequence, which are a compiler layer, a query rewriting layer, a query path selection layer, a plan generation layer, and a query execution layer in sequence. The query statement involves a group node module and a select node module in the compiler layer, involves a transitive closure module in the query rewriting layer, involves an index skipping module and a join calculation module in the query path selection layer, involves a hop count generation module and a join generation module in the plan generation layer, and involves a join execution factor module and a sort execution factor module in the query execution layer. A parse tree is obtained through the compiler layer and is input into the query rewriting layer. A rewriting parse tree is obtained through the query rewriting layer and is input into the query path selection layer. A query path is obtained through the query path selection layer and is input into the plan generation layer. A runtime structure is obtained through the plan generation layer. FIG. 13 also separately shows a data structure of the parse tree, a data structure of the rewriting parse tree, a data structure of the query path, and a data structure of the runtime structure.

According to the embodiments of this application, an efficient database instance is generated based on database functions involved in query, to improve execution efficiency of the database. For simple query, a small database instance can be used, to improve a hit rate of instructions, and reduce context switching and use of system resources. In addition, when a load is greater than a specified load, the small database instance may be invoked to respond to the query statement.

In the embodiments of this application, related data such as user information is involved. When the embodiments of this application are applied to a specific product or technology, user permission or consent needs to be obtained, and collection, use, and processing of related data need to comply with related laws, regulations, and standards of related countries and regions.

The following continues to describe an exemplary structure in which a database instance processing apparatus 455 provided in the embodiments of this application is implemented as a software module. In some embodiments, as shown in FIG. 2, the software module in the database instance processing apparatus 455 stored in the memory 450 may include: an obtaining module 4551, configured to obtain a plurality of sample query statements for a database, and obtain at least one computational element of the database corresponding to each sample query statement; a template module 4552, configured to form, for each sample query statement, a database execution template of the sample query statement by using the at least one computational element of the database corresponding to the sample query statement; a screening module 4553, configured to screen out a target database execution template from a plurality of database execution templates corresponding to the plurality of sample query statements; and a generation module 4554, configured to generate a database instance corresponding to each target database execution template, any database instance being configured to respond, when being executed, to a target query statement corresponding to the any database instance.

In some embodiments, the obtaining module 4551 is further configured to: detect an application program that has been run in the electronic device; and obtain the plurality of sample query statements for the database that are generated by the application program in a running process of the application program.

In some embodiments, the obtaining module 4551 is further configured to: perform level division processing on the database, to obtain a plurality of database layer structures of the database, each database layer structure including at least one candidate computational element; and perform the following processing for each sample query statement: obtaining an execution plan of the sample query statement, and performing decomposition processing on the execution plan, to obtain at least one operator needed by the execution plan; and obtaining, for each database layer structure and from the at least one candidate computational element of the database layer structure, a computational element configured for executing the operator.

In some embodiments, the obtaining module 4551 is further configured to: obtain a plurality of types of functions involved in the database; and divide the database into a plurality of layers based on the plurality of types of functions, to obtain the plurality of database layer structures of the database.

In some embodiments, the plurality of database layer structures include: a compiler layer, a query rewriting layer, a query path selection layer, a query execution layer, an index management layer, a data management layer, and a buffer management layer.

In some embodiments, the template module 4552 is further configured to: perform the following processing for each computational element: obtaining a database layer structure to which the computational element belongs in the database, and obtaining a level sequence of the database layer structure to which the computational element belongs in the database; forming a computational element set by using computational elements belonging to the same database layer structure; using, when there is one computational element set, the computational element set as a database execution template; and sorting, when there are a plurality of computational element sets and in the level sequence, computational element sets corresponding to different database layer structures, and using the plurality of sorted computational element sets as database execution templates.

In some embodiments, the screening module 4553 is further configured to: filter duplicate database execution templates from the plurality of database execution templates, to obtain at least one intermediate database execution template; and perform deletion processing on the at least one intermediate database execution template, and use a remaining intermediate database execution template as the target database execution template.

In some embodiments, the screening module 4553 is further configured to: perform the following processing for each intermediate database execution template: obtaining a sample query statement corresponding to the intermediate database execution template; and deleting, when the sample query statement corresponding to the intermediate database execution template satisfies a deletion condition, the intermediate database execution template, and using the remaining intermediate database execution template obtained after deletion is performed as the target database execution template.

In some embodiments, the deletion condition includes at least one of the following: a quantity of times that the sample query statement corresponding to the intermediate database execution template is executed is less than a quantity of times threshold; and a quantity of computational elements involved in the sample query statement corresponding to the intermediate database execution template is greater than a computational element quantity threshold.

In some embodiments, the database includes the plurality of database layer structures, any computational element belongs to one database layer structure, and the generation module 4554 is further configured to: perform the following processing for each target database execution template: obtaining at least one computational element of the target database execution template, and obtaining database code of each computational element; encapsulating database code of the computational elements belonging to the same database layer structure, to obtain database code corresponding to the database layer structure; and encapsulating database code of the plurality of database layer structures in the level sequence of the database layer structures, to obtain the database instance corresponding to the target database execution template.

In some embodiments, the apparatus further includes: a query module 4555, configured to: obtain a target query statement; obtain, when a first database execution template corresponding to the target query statement belongs to the target database execution template, a database instance corresponding to the first database execution template; and execute the database instance corresponding to the first database execution template, to obtain a query result used to respond to the target query statement.

In some embodiments, the query module 4555 is further configured to: obtain, when the first database execution template corresponding to the target query statement does not belong to the target database execution template, a full quantity of database instances, the full quantity of database instances including candidate computational elements of all database layer structures in the database; and execute the corresponding full quantity of database instances, to obtain the query result used to respond to the target query statement.

An embodiment of this application provides a computer program product, including computer-executable instructions, the computer-executable instructions being stored in a computer-readable storage medium. A processor of an electronic device reads the computer-executable instructions from the computer-readable storage medium, and the processor executes the computer-executable instructions, to enable the electronic device to perform the database instance processing method according to the embodiments of this application.

An embodiment of this application provides a computer-readable storage medium having computer-executable instructions stored therein. The computer-executable instructions, when executed by a processor, enable the processor to perform the database instance processing method provided in the embodiments of this application, for example, the database instance processing method shown in FIG. 3A to FIG. 3D.

In some embodiments, the computer-readable storage medium may be a memory such as a ferromagnetic random access memory (FRAM), a ROM, a programmable read-only memory (PROM), an erasable programmable read-only memory (EPROM), an electrically erasable programmable read-only memory (EEPROM), a flash memory, a magnetic surface memory, an optical disc, or a compact disc read-only memory (CD-ROM). Alternatively, the computer-readable storage medium may be various devices including one or any combination of the foregoing memories.

In some embodiments, the computer-executable instructions may be written in a form of a program, software, a software module, a script, or code in any form of programming language (including a compilation or interpretation language, or a declarative or procedural language), and may be deployed in any form, including being deployed as an independent program or being deployed as a module, a component, a subroutine, or another unit suitable for use in a computing environment.

In an example, the computer-executable instructions may, but do not necessarily, correspond to a file in a file system, and may be stored in a part of a file having another program or other data stored therein, for example, stored in one or more scripts in a HyperText Markup Language (HTML) document, stored in a single file that is specially used for a program in discussion, or stored in a plurality of collaborative files (for example, files having one or more modules, subprograms, or code parts stored therein).

In an example, the computer-executable instructions may be deployed to be executed on one electronic device, on a plurality of electronic devices located at one location, or on a plurality of electronic devices distributed at a plurality of locations and interconnected by using a communication network.

In conclusion, in the embodiments of this application, a plurality of sample query statements for a database and at least one computational element of the database corresponding to each sample query statement are obtained. For each sample query statement, a database execution template of the sample query statement is formed by using the at least one computational element of the database corresponding to the sample query statement, to obtain a database execution template corresponding to each sample query statement. Screening processing is performed on a plurality of database execution templates in a one-to-one correspondence with the plurality of sample query statements, to obtain a target database execution template. This is equivalent to simplifying the plurality of database execution templates, to avoid resource occupation of the database by a redundant database execution template or a database execution template having low utilization, thereby improving resource utilization of the database. A database instance corresponding to each target database execution template is generated. Any database instance is configured to respond, when being executed, to a target query statement corresponding to the any database instance. Therefore, the target query statement can be responded to in a manner of executing a customized database instance. In comparison to a manner of executing a full quantity of standard database instances, a quantity of database instances that need to be executed to respond to the query statement can be reduced, and query efficiency of the query statement can be improved.

The foregoing descriptions are merely embodiments of this application and are not intended to limit the protection scope of this application. Any modification, equivalent replacement, or improvement made within the spirit and scope of this application fall within the protection scope of this application.

## Claims

1. A method for processing a database instance executable by an electronic device, and comprising:
obtaining a plurality of sample query statements for a database, and obtaining at least one computational element of the database corresponding to each sample query statement;
forming, for each sample query statement, a database execution template of the sample query statement by using the at least one computational element of the database corresponding to the sample query statement;
screening out a target database execution template from a plurality of database execution templates corresponding to the plurality of sample query statement; and
generating a database instance corresponding to each target database execution template.

2. The method according to claim 1, wherein the obtaining a plurality of sample query statements for a database comprises:
detecting an application program that has been run in the electronic device; and
obtaining the plurality of sample query statements for the database that are generated by the application program in a running process of the application program.

3. The method according to claim 1 or 2, wherein the obtaining at least one computational element of the database corresponding to each sample query statement comprises:
performing level division processing on the database, to obtain a plurality of database layer structures of the database, each database layer structure comprising at least one candidate computational element;
performing the following processing for each sample query statement:
obtaining an execution plan of the sample query statement, and performing decomposition processing on the execution plan, to obtain at least one operator needed by the execution plan; and
obtaining a computational element configured for executing the operator from a plurality of candidate computational elements of the plurality of database layer structures.

4. The method according to claim 3, wherein the performing level division processing on the database, to obtain a plurality of database layer structures of the database comprises:
obtaining a plurality of types of functions involved in the database; and
dividing the database into the plurality of database layer structures based on the plurality of types of functions.

5. The method according to claim 3 or 4, wherein
the plurality of database layer structures comprise: a compiler layer, a query rewriting layer, a query path selection layer, a query execution layer, an index management layer, a data management layer, and a buffer management layer.

6. The method according to any one of claims 1 to 5, wherein the forming a database execution template of the sample query statement by using the at least one computational element of the database corresponding to the sample query statement comprises:
performing the following processing for each computational element: obtaining a database layer structure to which the computational element belongs in the database, and obtaining a level sequence of the database layer structure to which the computational element belongs in the database;
forming a computational element set by using computational elements belonging to the same database layer structure;
using, when there is one computational element set, the computational element set as the database execution template; and
sorting, when there are a plurality of computational element sets and in the level sequence, computational element sets corresponding to different database layer structures, and forming the database execution templates by using the plurality of sorted computational element sets.

7. The method according to any one of claims 1 to 6, wherein the screening out a target database execution template from a plurality of database execution templates corresponding to the plurality of sample query statement comprises:
filtering duplicate database execution templates from the plurality of database execution templates, to obtain at least one intermediate database execution template; and
performing deletion processing on the at least one intermediate database execution template, and using a remaining intermediate database execution template as the target database execution template.

8. The method according to claim 7, wherein the performing deletion processing on the at least one intermediate database execution template, and using a remaining intermediate database execution template as the target database execution template comprises:
performing the following processing for each intermediate database execution template:
obtaining a sample query statement corresponding to the intermediate database execution template;
deleting, when the sample query statement corresponding to the intermediate database execution template satisfies a deletion condition, the intermediate database execution template; and
using the remaining intermediate database execution template obtained after deletion is performed as the target database execution template.

9. The method according to claim 8, wherein
the deletion condition comprises at least one of the following:
a quantity of times that the sample query statement corresponding to the intermediate database execution template is executed is less than a quantity of times threshold; and
a quantity of computational elements involved in the sample query statement corresponding to the intermediate database execution template is greater than a computational element quantity threshold.

10. The method according to any one of claims 1 to 9, wherein the database comprises the plurality of database layer structures, any computational element belongs to one database layer structure, and the generating a database instance corresponding to each target database execution template comprises:
performing the following processing for each target database execution template:
obtaining at least one computational element of the target database execution template, and obtaining database code of each computational element;
encapsulating database code of the computational elements belonging to the same database layer structure, to obtain database code corresponding to the database layer structure; and
encapsulating database code of the plurality of database layer structures in the level sequence of the database layer structures, to obtain the database instance corresponding to the target database execution template.

11. The method according to any one of claims 1 to 10, wherein after the generating a database instance corresponding to each target database execution template, the method further comprises:
obtaining a target query statement;
obtaining, when a first database execution template corresponding to the target query statement belongs to the target database execution template, a database instance corresponding to the first database execution template; and
executing the database instance corresponding to the first database execution template, to obtain a query result used to respond to the target query statement.

12. The method according to claim 11, wherein the method further comprises:
obtaining, when the first database execution template corresponding to the target query statement does not belong to the target database execution template, a full quantity of database instances,
the full quantity of database instances comprising candidate computational elements of all database layer structures in the database; and
executing the corresponding full quantity of database instances, to obtain the query result used to respond to the target query statement.

13. A database instance processing apparatus, comprising:
an obtaining module, configured to obtain a plurality of sample query statements for a database, and obtain at least one computational element of the database corresponding to each sample query statement;
a template module, configured to form, for each sample query statement, a database execution template of the sample query statement by using at least one computational element of the database corresponding to the sample query statement;
a screening module, configured to screen out a target database execution template from a plurality of database execution templates corresponding to the plurality of sample query statement; and
a generation module, configured to generate a database instance corresponding to each target database execution template.

14. An electronic device, comprising:
a memory, configured to store computer-executable instructions; and
a processor, configured to execute the computer-executable instructions stored in the memory, to implement the database instance processing method according to any one of claims 1 to 12.

15. A computer-readable storage medium, having computer-executable instructions stored therein, to implement, when the computer-executable instructions are executed by a processor, the database instance processing method according to any one of claims 1 to 12.

16. A computer program product, comprising computer-executable instructions, to implement, when the computer-executable instructions are executed by a processor, the database instance processing method according to any one of claims 1 to 12.
